Europäisches Patentamt

European Patent Office

Office européen des brevets

(19)

(11) Veröffentlichungsnummer: **0 414 122 A2**

(12) # EUROPÄISCHE PATENTANMELDUNG

(21) Anmeldenummer: **90115662.0**

(22) Anmeldetag: **16.08.90**

(51) Int. Cl.⁵: **G08B 7/06, H04B 7/26**

(30) Priorität: **23.08.89 DE 3927759**

(43) Veröffentlichungstag der Anmeldung:
**27.02.91 Patentblatt 91/09**

(84) Benannte Vertragsstaaten:
**DE FR GB IT**

(71) Anmelder: **Blaupunkt-Werke GmbH**
**Robert-Bosch-Strasse 200**
**D-3200 Hildesheim(DE)**

(72) Erfinder: **Duckeck, Hans**
**Trockener Kamp 23**
**D-3200 Hildesheim(DE)**
Erfinder: **Becker, Hubert**
**Meisenwinkel 35**
**D-3200 Hildesheim(DE)**

(74) Vertreter: **Eilers, Norbert, Dipl.-Phys.**
**Blaupunkt-Werke GmbH**
**Robert-Bosch-Strasse 200**
**D-3200 Hildesheim(DE)**

(54) **Cityrufempfänger.**

(57) Es wird ein Cityrufempfänger beschrieben, dessen Eingangsstufe direkt an eine Autoradioantenne angekoppelt ist und dessen Tonrufgeneratorenausgang über eine Oderstufe an den NF-Eingang eines Autoradios angeschlossen ist.

Fig. 1

EP 0 414 122 A2

## CITYRUFEMPFÄNGER

Gegenstand des nachgesuchten Schutzrechts ist ein neuer Cityrufempfänger.

Das Prinzip der Cityrufempfänger ist beispielsweise in einem Aufsatz in der Funkschau 1989, Heft 15, Seite 63 bis 66 beschrieben. Seit einiger Zeit sind auch solche Cityrufempfänger auf dem Markt. Mit diesen lassen sich Informationen gezielt an bestimmte Empfänger übermitteln. Die Informationen werden von Cityruf sendern, die im Frequenzbereich von 470 Mhz arbeiten, ausgestrahlt. Der Telefonteilnehmer gelangt über die Einrichtungen des Selbstwählferndienstes auf eine Anschaltgruppe in den sogenannten Funkrufvermittlungsstellen. Die Anschaltgruppe wandelt das Datensignal in fast frequency shiftkey-Impulse und speist damit die Funkrufsendestellen.

Auf der Empfangsseite gibt es drei verschiedene Empfängertypen, die Nur-Ton-Empfänger, die Nummerik-Empfänger und die Alphanummerik-Empfänger. Mit dem letzteren können Texte empfangen und bis zu einer Länge von 2 000 Zeichen abgespeichert werden. Der Text wird auf einen LC-Display mit Punktmatrix zur Anzeige gebracht.

Die vorhandenen Cityrufempfänger haben den Nachteil, daß sie sich in einem geschlossenen Fahrgastraum eines Kraftfahrzeugs praktisch nicht empfangen lassen, weil das Kraftfahrzeug eine Art Faraday'schen Käfig bildet.

Zur Übermittlung von alpha-numerischen Zeichen in Kraftfahrzeuge wäre der Paging-Dienst in dem Radiodatensystem RDS, das für die Bedürfnisse des mobilen Rundfunkempfängers, also des Autoradios, konzipiert wurde und dessen Spezifikation in der Veröffentlichung EBU Technical Center TEC 3244 E, März 1984 niedergelegt ist, geeignet, wenn es ihn bereits gäbe. Damit werden sich erst in weiterer Zukunft auch über die Rundfunkstationen Informationen gezielt an bestimmte Empfänger addressieren lassen. Einzelheiten hierfür sind jedoch noch nicht festgelegt.

Ein Autofahrer, der die Übermittlung von Informationen erwartet, muß sich daher entweder bis zur Einführung des Pagingdienstes in dem RDS-System gedulden oder sich zum Empfang mit seinem Cityrufempfänger aus dem Fahrzeug herausbemühen. Angaben in der Literatur, daß der Empfang des Cityrufs auch in Autos möglich ist, treffen nur auf sehr günstige Versorgungsverhältnisse zu.

Es bestand somit die Aufgabe, den Empfang des Cityrufs in Kraftfahrzeugen zu verbessern.

Diese Aufgabe läßt sich mit einem Cityrufempfänger mit den Merkmalen des Kennzeichens des Patentanspruchs 1 lösen.

Anhand eines Blockschaltbildes ist der erfindungsgemäße Cityrufempfänger näher erläutert.

Der Cityrufempfänger besteht aus einem auf die Senderfrequenz abgestimmten Eingangskreis 1, einem Demodulator des Trägers 2 und einem Decoder 3. Der Decoder 3 schaltet ggf. das Display 4 ein, sofern nicht nur ein akustischer Ruf über den Ruftongenerator 5 und den Lautsprecher 6 ausgelöst werden soll.

Das Display 4 ist über einen Mikroprozessor 7 einerseits mit dem Decoder 3, andererseits mit dem Bedienteil 8 des Cityrufempfängers verbunden. Das Ablaufprogramm des Mikroprozessors enthält die einzelnen erforderlichen Schritte zur Steuerung des Funktionsablaufes in dem Cityrufempfänger.

Erfindungsgemäß ist der neue Cityrufempfänger über eine Kapazität 9 an eine Autoradioantenne 10 angekoppelt, an deren Fußpunkt auch der DKW-Eingangskreis 11 und der Mittelwelleneingangskreis 12 eines Tuners 13 eines Autoradios angeschlossen sind.

Das an die Autoradioantenne 10 angeschlossene Autoradio umfaßt neben dem Tuner 13, der neben den bereits erwähnten Eingangskreisen Mischstufen und ZF-Stuf en enthält, eine NF-Stufe 14 und einen dem Lautsprecher 6 vorgeschalteten Lautstärkeregler 15.

Bei den handelsüblichen Autoradios wird beim Wechsel vom DKW-Empfang auf Mittelwellenempfang der UKW-Eingangskreis vom Wellenschalter 17 abgeschaltet und der Mittelwelleneingangskreis eingeschaltet. Der Wellenschalter des Autoradios wird von dessen Bedienteil 18 gesteuert.

Alle Cityrufempfänger sind dazu eingerichtet, zumindestest den sogenannten Nur-Tonruf zu empfangen und wiederzugeben. In dem erfindungsgemäß ausgebildeten Cityrufempfänger wird der Tonruf über den Lautsprecher 6 des Autoradioteils wiedergegeben, ohne daß zuvor eine Umschaltung des Eingangskreises von UKW auf Cityruf erfolgte. Der erfindungsgemäße Verzicht auf einen Umschalter erfolgt aus der Erkenntnis, daß jeder Besitzer eines Cityrufempfängers dem Empfang eines Cityrufs Vorrang vor dem Empfang eines Rundfunkprogramms einräumt und daher der Citytonruf den Rundfunkempfang ohne weiteres "stören" darf.

Damit der Tonruf jedoch nicht nur als Störung auftritt, sondern deutlich erkennbar den Rundfunkempfang dominiert, wird der Tonruf mit einem ausreichenden Pegel über eine Oderstufe 16 in die NE-Stufe 14 des Autoradios eingespeist. Bei entsprechend richtiger Wahl der Pegel wird auch bei leisegeregelten Rundfunkempfang der Citytonruf deutlich hörbar.

In dem Ausführungsbeispiel des erfindungsgemäßen Cityrufempfängers wird die Lautstärke der Wiedergabe in an sich bekannter Weise, z. B. durch Aufhebung der Überbrückung eines Widerstandes 20 im Fußpunkt des Lautstärkeregelers 21 durch einen Transistor 22 beim Empfang eines Citytonrufs - d. h. bei Vorhandensein eines Signals am Ausgang des Demodulators 2 - angehoben.

Zur Darstellung der alphanummerischen Zeichen dient, wie bereits erwähnt, das Display 4. Da die dargestellte Nachricht nach der Aufnahme durch den Besitzer des Empfängers ohne Interesse ist, ist ein Löschschalter 19 im Bedienteil 8 vorgesehen, der bei Betätigung durch den Fahrer des Fahrzeugs die Cityrufinformation löscht. Danach können über eine Oderstufe 23 die z. B. am Datenausgang des Bedienteils 18 des Autoradios anstehenden Daten über die Einstellung der Autoradios wie die Frequenz des eingestellten Rundfunksenders und die betätigten Funktionen des Autoradios angezeigt werden. Diese Löschschaltung macht sich die Tatsache zunutze, daß die Cityrufinformationen nicht ständig empfangen werden, während die Betriebsdaten des Autoradios ständig verfügbar sind. Wesentlich ist also die untergeordnete Anzeige der Autoradiobetriebsdaten gegenüber der Anzeige der Cityrufinformationen. Dabei ist es von besonderem Vorteil, wenn der Cityruf decoder das Display nur soweit neu beschreibt, wie es zur Darstellung der Informationen erforderlich ist und daß auf der restlichen Fläche des Display die Anzeige der Autoradiobetriebsdaten erhalten bleibt, daß also auch hier die Cityrufinformation als Störung "der Anzeige der Autoradiobetriebsdaten" ertragen wird.

Ist später in das Autoradio ein RDS-Decoder 24 eingebaut, der auch Paging-Verkehr erlaubt, dann kann das Display 4 auch die über diesen RDS-Dienst übermittelten Informationen anzeigen. Zweckmäßigerweise wird dann der Ausgang des RDS-Decoders 24 über eine Oderschaltung 25 mit demselben Eingang des Mikroprozessor 7 verbunden, auf den auch der Ausgang des Cityrufdecoders 3 geführt ist.

Die "störende Anzeige" der Information d. h. die Aufrechterhaltung der teilweisen Anzeige der Autoradiobetriebsdaten ist dann mit Vorteil auch bei der Übermittlung von RDS-Paging-Daten gewährleistet.

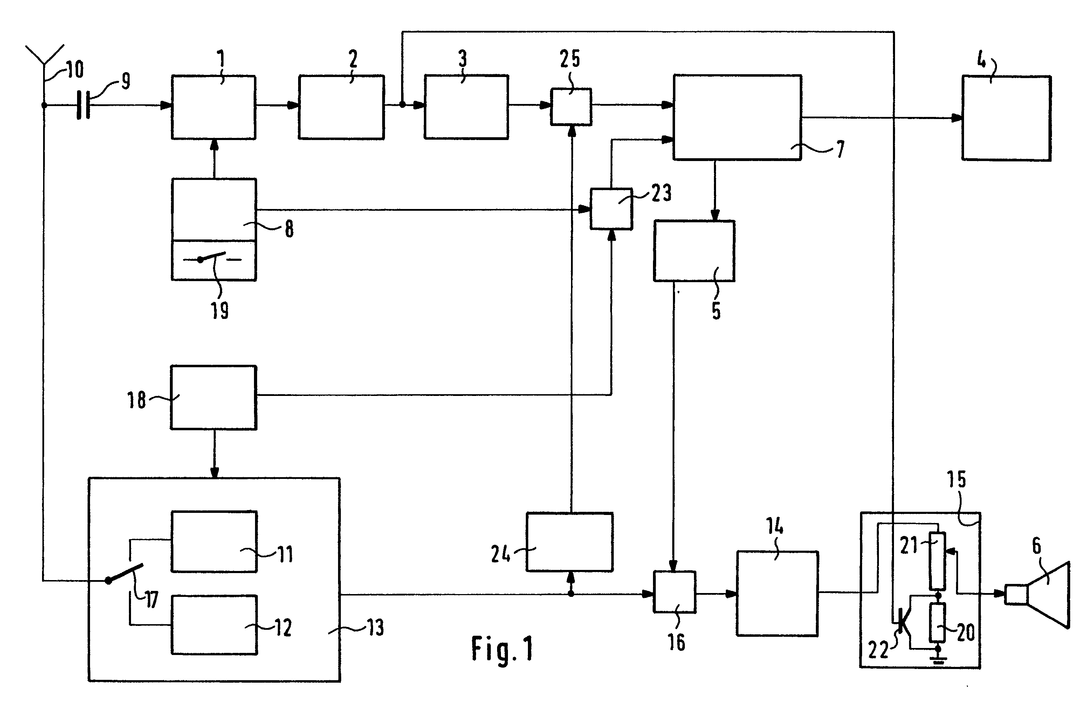

**Ansprüche**

1. Cityruf-Paging-Datenempfänger, mit einem Datendisplay und einem Tonrufgenerator,
dadurch gekennzeichnet,
daß die Eingangsstufe (1) des Cityrufempfängers direkt ohne Umschalter an eine Autoradioantenne (10) angekoppelt ist, an der gleichzeitig eine der Eingangsstufen (11, 12) eines Autoradios liegt und daß der Ausgang des Tonrufgenerators (5) über eine Oderstufe (16) an den Eingang des NF-Verstärkers (14) des Autoradios angeschlossen ist.

2. Cityruf-Paging-Datenempfänger nach Anspruch 1,
dadurch gekennzeichnet,
daß der Pegel des Tonrufgenerators (5) am Eingang des NF-Verstärkers (14) größer als der Ausgangspegel des NE-Signals des Autoradios gewählt ist.

3. Cityruf-Paging-Datenempfänger nach Anspruch 1 oder 2,
dadurch gekennzeichnet,
daß die Überbrückung eines Fußpunktwiderstandes (20) im Lautstärkeregler (21) durch einen Transistor (22) bei einem Eingangssignal am Cityrufdecoder aufgehoben wird.

4. Cityruf-Paging-Empfänger nach Anspruch 1,
dadurch gekennzeichnet,
daß der Datenausgang des Autoradios mit dem Eingang des Datendisplays des Cityrufempfängers verbunden ist.

Fig.1